# EUROPEAN PATENT APPLICATION

(11) **EP 4 362 164 A1**
(43) Date of publication of application: **01.05.2024**
(21) Application number: 21946517.6
(22) Date of filing: 25.06.2021
(51) Int. Cl.: H01M 10/058, H01M 10/0587, H01M 4/13

(54) **WINDING-TYPE LITHIUM ION BATTERY AND ELECTRONIC DEVICE**

(71) Applicant: Ningde Amperex Technology Limited, Ningde, Fujian 352100 (CN)
(72) Inventor: DAI, Zhifang, Ningde, Fujian 352100 (CN); LONG, Hai, Ningde, Fujian 352100 (CN)
(74) Representative: Icosa
(86) International application number: PCT/CN2021/102442
(87) International publication number: WO 2022/267024

(57) **Abstract**

A winding-type lithium ion battery and an electronic device. The winding-type lithium ion battery comprises an electrode assembly (20); the electrode assembly (20) comprises a first electrode plate (21), a separator (22), and a second electrode plate (23) that are successively stacked and wound; the first electrode plate (21) comprises a first current collector (200a) and multiple first tabs (212) electrically connected to the first current collector (200a); the second electrode plate (23) comprises a second current collector (200b) and multiple second tabs (232) electrically connected to the second current collector (200b); the electrode assembly (20) is flat, and a notch S is provided at at least one corner of the electrode assembly (20). By providing a multi-tab structure, the charge and discharge performance of the battery is improved, and a battery failure can be avoided when a single tab is damaged, thus improving the safety performance of the battery. The provision of the notch can increase the width of the electrode plates, reduce the movement space of the battery when the battery is dropped and reduce the energy density of the battery; meanwhile, the risk of battery leakage is reduced, and the safety performance of the battery is improved.

## Description

### TECHNICAL FIELD

Embodiments of this application relate to the field of lithium-ion battery technologies and particularly to a wound-type lithium-ion battery and an electronic apparatus.

### BACKGROUND

Lithium-ion batteries have been widely used in digital, Bluetooth, wearable, and other fields due to their advantages of high mass-specific energy, good safety performance, simple preparation, low cost, customizable appearance design, and the like. In recent years, people have put forward higher and higher requirements for the performance of lithium-ion batteries. Therefore, there is an urgent need to develop lithium-ion batteries with high power, high energy density, and high safety performance.

### SUMMARY

Embodiments of this application aim to provide a wound-type lithium-ion battery and an electric device, where the wound-type lithium-ion battery has high power, high energy density, and high safety performance.

Some embodiments of this application use the following technical solution to solve its technical problem: a wound-type lithium-ion battery is provided, including an electrode assembly, where the electrode assembly includes a first electrode plate, a separator, and a second electrode plate sequentially stacked and wound. The first electrode plate includes a first current collector and a plurality of first tabs electrically connected to the first current collector, and the second electrode plate includes a second current collector and a plurality of second tabs electrically connected to the second current collector.

The electrode assembly is flat, and the electrode assembly is provided with a notch in at least one of its corners.

In some embodiments, along a winding direction of the electrode assembly, the first electrode plate is provided with a linear array of first notches at the edge, and the second electrode plate is provided with a linear array of second notches corresponding to and matching the first notches, at the edge. During winding for formation, corresponding edges of the first notches and the second notches are aligned, and the first notches and the second notches form the notch.

In some embodiments, along a winding direction of the electrode assembly, the notch has a width a in a range of 0.2 mm ≤ a ≤ 4 mm.

In some embodiments, along an extension direction of the first tab, the notch has a length b in a range of 0.3 mm ≤ b ≤ 4 mm.

In some embodiments, the width a of the notch is in a range of 0.5 mm ≤ a ≤ 1.5 mm; and the length b of the notch is in a range of 0.5 mm ≤ b ≤ 1.5 mm.

In some embodiments, the notch has an area c in a range of 0.05 mm² ≤ c ≤ 5 mm².

In some embodiments, the area c of the notch is in a range of 0.12 mm² ≤ c ≤ 1.2 mm².

In some embodiments, the electrode assembly includes a top surface and a bottom surface opposite each other, and a flat portion and a bent portion connecting the top surface and the bottom surface. The first tabs extend out of the top surface. Corners of the electrode assembly are located at an end of the bent portion. The end of the bent portion is where the bent portion intersects with the top surface and/or the bottom surface in an extension direction perpendicular to the top surface and/or the bottom surface.

In some embodiments, in a projection of the electrode assembly along its thickness direction, in an extension direction of the first tab, length L1 of the outermost edge of the bent portion and length L2 of the main body of the electrode assembly satisfy 0.5 mm ≤ L2-L1 ≤ 3 mm. The length of the main body of the electrode assembly is a vertical distance between the top surface and the bottom surface.

In some embodiments, in a winding direction of the electrode assembly, a difference between width of the top surface and/or bottom surface and width of the main body of the electrode assembly ranges from 0.3 mm to 8 mm. The width of the main body of the electrode assembly is a distance between projections of the outermost edges of the two bent portions.

In some embodiments, the corner of the electrode assembly includes an intersection of an extension line of the projection of the outermost edge of the bent portion and the top surface and/or bottom surface.

In some embodiments, the first electrode plate has a first end and a second end opposite each other, and the first electrode plate further includes a first active substance. The first current collector includes a first side edge as well as a first surface and a second surface opposite each other, the first surface includes a first coated region and a first uncoated region, and the second surface includes a second coated region, where at the first end, the first coated region is aligned with the second coated region, and at the second end, the first coated region is misaligned with the second coated region. The first active substance is disposed in the first coated region and the second coated region. Each of the first tabs protrudes out of the first side edge.

In some embodiments, the second electrode plate has a first end and a second end opposite each other, and the second electrode plate further includes a second active substance. The second current collector includes a second side edge as well as a first surface and a second surface opposite each other, the first surface of the second current collector includes a first coated region and a first uncoated region, and the second surface of the second current collector includes a second coated region, where at the first end of the second electrode plate, the first coated region on the second current collector is aligned with the second coated region on the second current collector, and at the second end of the second current collector, the first coated region on the second current collector is misaligned with the second coated region on the second current collector. The second active substance is disposed in the first coated region on the second current collector and the second coated region on the second current collector. Each of the second tabs protrudes out of the second side edge.

In some embodiments, along the winding direction of the electrode assembly, at a terminating end of the first electrode plate, the first coated region and the second coated region on the first electrode plate are misaligned.

In some embodiments, along the winding direction of the electrode assembly, at a starting end of the second electrode plate, the first coated region and the second coated region on the second electrode plate are misaligned.

In some embodiments, both the first end and the second end of the first electrode plate include a current collector provided with no active substance layer on either side.

In some embodiments, both the first end and the second end of the second electrode plate include a current collector provided with no active substance layer on either side.

In some embodiments, along the winding direction of the electrode assembly, under a condition that at the terminating end of the first electrode plate, the first coated region and the second coated region on the first electrode plate are misaligned, and at the starting end of the second electrode plate, the first coated region and the second coated region on the second electrode plate are misaligned, the terminating end of the first electrode plate includes a current collector provided with no active substance layer on either side, and both the terminating end and starting end of the second electrode plate include a current collector provided with no active substance layer on either side.

In some embodiments, the wound-type lithium-ion battery further includes a housing, where the electrode assembly is accommodated in the housing, the housing fits with the electrode assembly in shape, the housing is provided with a rounded corner corresponding to and matching the notch, and both the first tab and the second tab extend out of the housing.

In some embodiments, a difference d between length of the housing and length of the electrode assembly is in a range of 1.8 mm ≤ d ≤ 3.3 mm.

In some embodiments, the rounded corner is an outwardly convex corner, and the notch is an inwardly concave corner.

Embodiments of this application further provide an electronic apparatus including the wound-type lithium-ion battery as described above.

Beneficial effects of some embodiments of this application are as follows:

Some embodiments of this application provide a wound-type lithium-ion battery and an electronic apparatus. Providing a multi-tab structure improves the charging and discharging performance of the battery and also avoids a battery failure caused by damage to a single tab, thereby improving the safety performance of the battery. However, the headspace of the multi-tab structure is large, making it prone to movement within a battery packaging bag, resulting in battery drop and failure. Especially, failure is most likely to occur at corners. With notches disposed at the corners of the electrode assembly, the width of the electrode sheet can be appropriately increased, reducing the space for the electrode assembly to move within the packaging bag. This can significantly reduce the possibility of the corners of the electrode assembly piercing through the packaging bag while increasing the energy density of the lithium-ion battery, thereby mitigating the hazards caused by dropping and improving the safety performance of the battery.

### BRIEF DESCRIPTION OF DRAWINGS

One or more embodiments are used as examples for description by using figures in corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.
FIG. 1 is a schematic planar diagram of a wound-type lithium-ion battery according to an embodiment of this application;
FIG. 2 is a schematic structural diagram of an electrode assembly in the wound-type lithium-ion battery shown in FIG. 1;
FIG. 3 is a schematic structural diagram of an electrode plate and a separator in an unfolded state;
FIG. 4 is a schematic structural diagram of a first electrode plate according to an embodiment of the structure shown in FIG. 3;
FIG. 5 is a top view of the first electrode plate shown in FIG. 4;
FIG. 6 is a schematic structural diagram of a second electrode plate according to an embodiment of the structure shown in FIG. 3;
FIG. 7 is a top view of the second electrode plate shown in FIG. 6;
FIG. 8 is a top view of an electrode assembly according to an embodiment of this application;
FIG. 9 is a schematic structural diagram of a first electrode plate according to an embodiment of the structure shown in FIG. 3;
FIG. 10 is a top view of the first electrode plate shown in FIG. 9;
FIG. 11 is a schematic structural diagram of a second electrode plate according to an embodiment of the structure shown in FIG. 3;
FIG. 12 is a top view of the second electrode plate shown in FIG. 11;
FIG. 13 is a top view of an electrode assembly according to an embodiment of this application;
FIG. 14 is a schematic structural diagram of a first electrode plate according to an embodiment of the structure shown in FIG. 3;
FIG. 15 is a top view of the first electrode plate shown in FIG. 14;
FIG. 16 is a schematic structural diagram of a second electrode plate according to an embodiment of the structure shown in FIG. 3;
FIG. 17 is a top view of the second electrode plate shown in FIG. 16;
FIG. 18 is a top view of an electrode assembly according to an embodiment of this application;
FIG. 19 is a schematic structural diagram of a first electrode plate according to an embodiment of the structure shown in FIG. 3;
FIG. 20 is a top view of the first electrode plate shown in FIG. 19;
FIG. 21 is a schematic structural diagram of a second electrode plate according to an embodiment of the structure shown in FIG. 3;
FIG. 22 is a top view of the second electrode plate shown in FIG. 21; and
FIG. 23 is a top view of an electrode assembly according to an embodiment of this application.

### DESCRIPTION OF EMBODIMENTS

For ease of understanding of this application, the following describes this application in more detail with reference to the accompanying drawings and specific embodiments. It should be noted that when an element is referred to as being "connected to" another element, it may be directly connected to the another element, or there may be one or more elements in between. In the descriptions of this application, the orientations or positional relationships indicated by the terms "starting end", "terminating end", "first end", "second end", "head", and the like are based on the orientations or positional relationships shown in the accompanying drawings. Such terms are intended merely for the ease and brevity of description of this application without indicating or implying that the apparatuses or components mentioned in this application must have specified orientations or must be constructed and operated in the specified orientations, and therefore shall not be construed as any limitations on this application. In addition, the terms "first" and "second" are merely intended for a purpose of description and shall not be understood as an indication or implication of relative importance.

Unless otherwise defined, all technical and scientific terms used herein shall have the same meanings as commonly understood by persons skilled in the art to which this application belongs. The terms used in the specification of this application are merely intended to describe specific embodiments but not to constitute any limitations on this application. The term "and/or" used herein includes any and all combinations of one or more associated items that are listed.

In addition, technical features involved in different embodiments of this application that are described below may be combined as long as they do not conflict with each other.

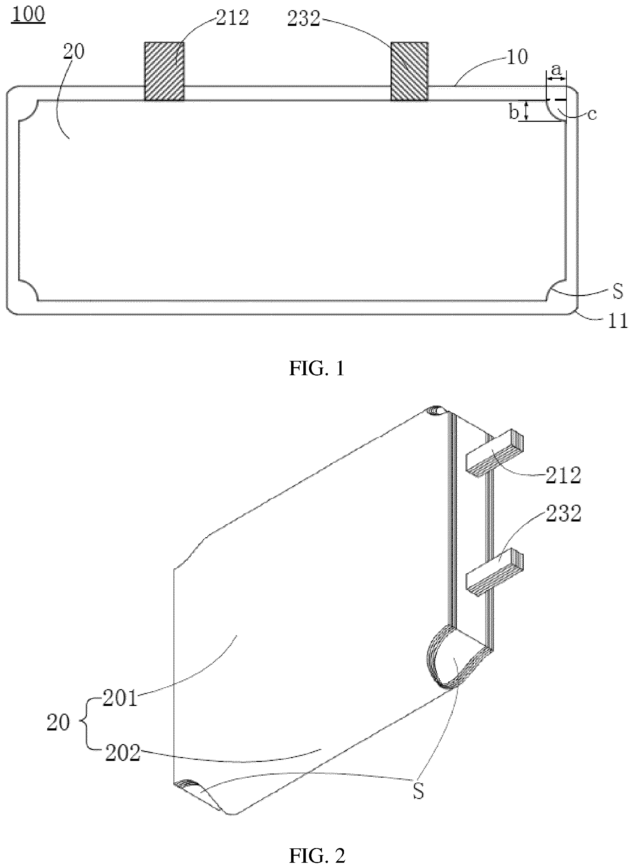

Referring to FIG. 1, FIG. 1 is a schematic planar diagram of a wound-type lithium-ion battery 100 according to an embodiment of this application. The wound-type lithium-ion battery 100 is flat, including a housing 10 and an electrode assembly 20, where the electrode assembly 20 is flat and is accommodated in the housing 10.

In the related art, corners of the lithium-ion battery housing are generally punched as right-angled corners, and during punching, the corners are prone to stretching, leading to battery electrolyte leakage and affecting the safety performance of the battery. Therefore, the four corners of the housing are punched into rounded corners to reduce the risk of electrolyte leakage caused by punching. This application is no exception. As shown in FIG. 1, the housing 10 fits with the electrode assembly 20 in shape, and the housing 10 is provided with rounded corners 11.

In some embodiments, the housing 10 is also referred to as a packaging bag, and the packaging bag is made of aluminum-plastic film.

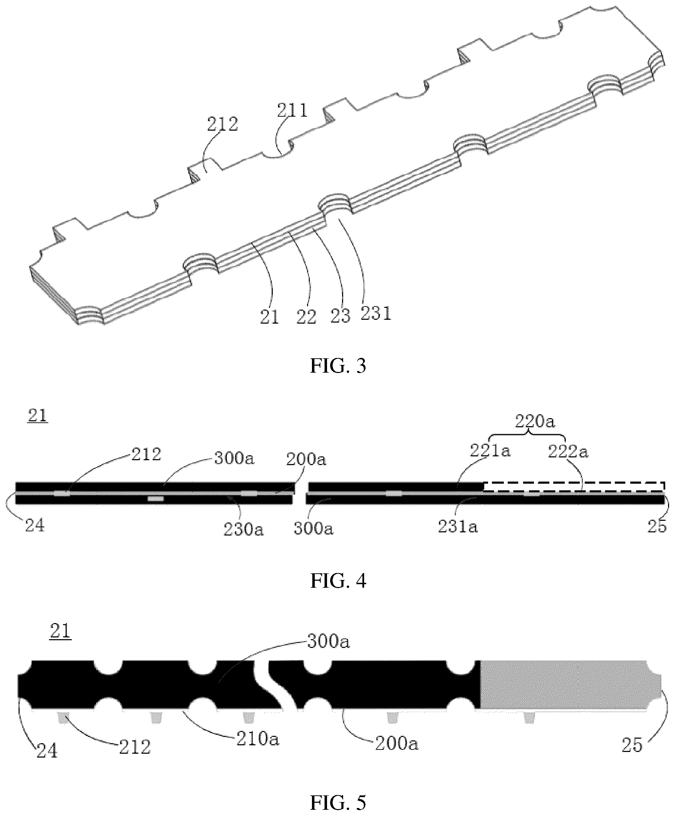

Referring to FIGs. 2 and 3 together, the electrode assembly 20 includes a first electrode plate 21, a separator 22, and a second electrode plate 23 sequentially stacked and wound, where the first electrode plate 21 includes a plurality of first tabs 212, the second electrode plate 23 includes a plurality of second tabs 232, and both the first tabs 212 and the second tabs 232 extend out of the housing 10. The term "a plurality of" herein refers to two or more.

In some embodiments, the first tabs 212 and the second tabs 232 may be located at a same end of the electrode assembly 20 or at different ends of the electrode assembly.

Provision of the plurality of tabs can improve the discharge performance of the electrode plate, enabling the lithium-ion battery to have high power. However, due to the need to fold the tabs at the head of the electrode assembly 20, compared to the conventional single-tab structure, the multi-tab structure requires a larger space in the housing, greatly increasing the possibility of the electrode assembly 20 moving within the housing 10, and greatly increasing the probability of failure of the lithium-ion battery caused by dropping. Failure is most likely to occur at right-angled corners of the electrode assembly 20.

Furthermore, if the housing 10 is provided with rounded corners, dimensions of the right-angled corners of the electrode assembly 20 exceed the rounded corners, making it impossible to fit the electrode assembly 20 into the aluminum-plastic film. Therefore, it is necessary to reduce the dimensions of the electrode assembly 20, for example, reducing the length of the electrode assembly, which means reducing the width of the electrode plates, in order to increase the gap between the electrode assembly 20 and the housing 10. However, this approach inevitably reduces the energy density of the lithium-ion battery.

It should be noted that the gap between the electrode assembly 20 and the housing 10 is a difference between the length of the housing 10 and the length of the electrode assembly 20.

Referring to FIG. 2, in some embodiments, to improve the safety performance and energy density of the lithium-ion battery, the electrode assembly 20 is provided with a notch S in at least one corner of the electrode assembly 20, where the notch S corresponds to and matches the rounded corner 11 on the housing 10.

Specifically, the electrode assembly 20 includes a top surface and a bottom surface opposite each other, as well as a flat portion 201 and a bent portion 202 connecting the top surface and the bottom surface. The tabs extend out of the top surface. The corners of the electrode assembly 20 are located at ends of the bent portion 202, the ends of the bent portion 202 being where the bent portion 202 intersects the top surface and/or the bottom surface in an extension direction perpendicular to the top surface and/or the bottom surface. In the projection of the electrode assembly 20 along its thickness direction, in an extension direction of the first tab (a length direction of the electrode assembly), a difference between length L1 of the outermost edge of the bent portion and length L2 of the main body of the electrode assembly ranges from 0.5 mm to 3 mm; and along a winding direction of the electrode assembly, a difference between width of the top surface and/or bottom surface and width of the main body of the electrode assembly ranges from 0.3 mm to 8 mm. The length of the main body of the electrode assembly is a vertical distance between the top surface and the bottom surface; and the width of the main body of the electrode assembly is a distance between projections of the outermost edges of the two bent portions. The corner of the electrode assembly 20 includes an intersection of an extension line of the projection of the outermost edge of the bent portion and the top surface and/or bottom surface.

With the notches S disposed at the corners of the electrode assembly 20, the width of the electrode plates can be appropriately increased, and the difference between the length of the housing 10 and the length of the electrode assembly 20 can be reduced, reducing the space for the electrode assembly to move within the housing 10. This can significantly reduce the possibility of the corners of the electrode assembly 20 piercing through the housing 10 while increasing the energy density of the lithium-ion battery, thereby mitigating the hazards caused by dropping and improving the safety performance of the battery.

In some embodiments, as shown in FIG. 1, the rounded corners 11 on the housing 10 are outwardly convex corners, and the notches S of the electrode assembly 20 are inwardly concave corners.

In some embodiments, the rounded corners 11 on the housing 10 and the notches S of the electrode assembly 20 are all outwardly convex corners or all inwardly concave corners.

It can be understood that the number of the notches S may be 1, 2, 3, or 4, which is not limited in this application. For ease of description, the number of the notches S being 4 is used as an example for illustration in some embodiments of this application.

In some embodiments, the difference d between the length of the housing 10 and the length of the electrode assembly 20 is in a range of 1.8 mm ≤ d ≤ 3.3 mm.

Referring to FIGs. 2 and 3 together, along the winding direction of the electrode assembly 20, the first electrode plate 21 is provided with a linear array of first notches 211 at the edge, and the second electrode plate 23 is provided with a linear array of second notches 231 corresponding to and matching the first notches 211, at the edge. During winding for formation, corresponding edges of the first notches 211 and the second notches 231 are aligned, and the first notches 211 and the second notches 231 form the notch S.

It can be understood that the above notch is half of the first notch or the second notch, and the above notch may be triangular, semi-elliptical, semi-circular, or the like, which is not limited in this application. In addition, since the separator 22 is made of a soft material and does not cause an impact on the housing 10, there is no need for the separator 22 to be provided with a notch similar to the notches of the first electrode plate 21 or the second electrode plate 23. For ease of understanding, the separator at the notch S has been omitted in the drawings of this application.

The first notch and the second notch can be formed by die cutting or laser cutting during the formation of the first electrode plate 21 and the second electrode plate 23.

Preferably, in these embodiments of this application, the first notch and/or second notch is formed by laser cutting. Compared to blade die cutting, laser cutting has higher efficiency and stability. For example, the parameters for laser cutting are as follows: laser cutting speed being 15-30 m/min, cutting frequency being 2000 KHZ-4000 KHZ, and cutting power being 130-140 W.

Referring to FIG. 1, in some embodiments, the width a of the notch S along the winding direction of the electrode assembly 20 is in a range of 0.2 mm ≤ a ≤ 4 mm.

When the width a of the notch S is less than 0.2 mm, it is likely to cause formation of excessive burrs during cutting, and the burrs may pierce the separator, resulting in a risk of a short circuit in the lithium-ion battery. When the width a of the notch S is greater than 4 mm, the capacity loss of the lithium-ion battery is too large, which is not practical.

In some embodiments, the width a of the notch S is in a range of 0.5 mm ≤ a ≤ 1.5 mm.

In some embodiments, as shown in FIG. 1, the length b of the notch S is in a range of 0.3 mm ≤ b ≤ 4 mm along the extension direction of the first tab 212 or the second tab 232.

When the length b of the notch S is in a range of b < 0.3 mm, burrs are prone to exceed the standard during the cutting process, and there is a risk of piercing the separator leading to a short-circuit of the lithium-ion battery. When the length b of the notch S is in a range of b > 4 mm, the capacity loss of the lithium-ion battery is too large, which is not practical.

In some embodiments, the length b of the notch S is in a range of 0.5 mm ≤ b ≤ 1.5 mm.

In some embodiments, as shown in FIG. 1, the area c of the notch is in a range of: 0.05 mm² ≤ c ≤ 5 mm².

When the area c of the notch S is less than 0.05 mm², burrs are prone to exceed the standard during the cutting process, and there is a risk of piercing the separator leading to a short circuit of the lithium-ion battery. When the area c of the notch S is greater than 5 mm², the capacity loss of the lithium-ion battery is too large, which is not practical.

In some embodiments, the area c of the notch S is in a range of 0.12 mm² ≤ c ≤ 1.2 mm². The area (c) of the notch S can be calculated using image processing software. For example, the electrode assembly 20 is placed on a plane, an image of the electrode assembly is obtained (with the lens facing the flat portion), and a projection of the electrode assembly is obtained. The projection on the plane is a rectangular shape with the notch. The software completes the missing part of the rectangle and calculates the area of the rectangle. At the same time, image recognition technology is used to calculate the area of the projection of the electrode assembly. The area c of the notch S is calculated as (area of the rectangle - area of the projection of the electrode assembly) divided by the number of notches.

The following provides a further detailed description of the present application in conjunction with specific embodiments and the accompanying drawings. However, it should be understood that some embodiments of the present application are not limited to the following examples.

### Example 1

The electrode assembly 20 of the lithium-ion battery had a notch S at all four corners. The width a of the notch was 0.2 mm, the length b of the notch was 0.3 mm, the area c of the notch was 0.05 mm ², and the difference d between the length of the housing and the length of the electrode assembly was 3.1 mm. The lithium-ion battery was charged to check whether electrolyte leakage occurred in the lithium-ion battery and then was discharged to measure the capacity of the lithium-ion battery.

### Example 2

The electrode assembly 20 of the lithium-ion battery had a notch S at all four corners. The width a of the notch was 4 mm, the length b of the notch was 4 mm, the area c of the notch was 5 mm ², and the difference d between the length of the housing and the length of the electrode assembly was 1.8 mm. The lithium-ion battery was charged to check whether electrolyte leakage occurred in the lithium-ion battery and then was discharged to measure the capacity of the lithium-ion battery.

### Example 3

The electrode assembly 20 of the lithium-ion battery had a notch S at all four corners. The length a of the notch was 0.5 mm, the width b of the notch was 0.5 mm, the area c of the notch was 0.12 mm², and the difference d between the length of the housing and the length of the electrode assembly was 2.8 mm. The lithium-ion battery was charged to check whether electrolyte leakage occurred in the lithium-ion battery, and then was discharged to measure the capacity of the lithium-ion battery.

### Example 4

The electrode assembly 20 of the lithium-ion battery had a notch S at all four corners. The width a of the notch was 1.5 mm, the length b of the notch was 1.5 mm, the area c of the notch was 1.2 mm², and the difference d between the length of the housing and the length of the electrode assembly was 1.8 mm. The lithium-ion battery was charged to check whether electrolyte leakage occurred in the lithium-ion battery and then was discharged to measure the capacity of the lithium-ion battery.

### Comparative Example 1

The electrode assembly 20 of the lithium-ion battery has no notch S, that is, the electrode assembly 20 had right-angle corners, and the difference d between the length of the housing and the length of the electrode assembly is 3.3 mm. The lithium-ion battery was charged to check whether electrolyte leakage occurred in the lithium-ion battery and then was discharged to measure the capacity of the lithium-ion battery.

### Comparative Example 2

The electrode assembly 20 of the lithium-ion battery had a notch S at all four corners. The width a of the notch was 5 mm, the length b of the notch was 5 mm, the area c of the notch was 12 mm ², and the difference d between the length of the housing and the length of the electrode assembly was 1.8 mm. The lithium-ion battery was charged to check whether electrolyte leakage occurred in the lithium-ion battery and then was discharged to measure the capacity of the lithium-ion battery.

### Performance testing:

The lithium-ion batteries in Examples 1-4 and Comparative Examples 1 and 2 were tested.

Specifically, the test conditions were as follows: the length of the electrode assembly 20 in all the lithium-ion batteries was 50 mm. The lithium-ion batteries under test were placed on a test bench and then charged at, for example, a constant current of 0.2 C to a cut-off voltage of 4.45 V to observe whether electrolyte leakage occurred in the lithium-ion battery. Then, the lithium-ion batteries were discharged at a constant current of 0.2 C to a cut-off voltage of 3 V to measure the capacity of the lithium-ion batteries, where the capacity of the lithium-ion battery is the product of the current and the time required to discharge the battery at a constant current of 0.2 C to a cut-off voltage of 3 V. A group of 10 tests was performed, that is, 10 lithium-ion batteries of the same embodiment or comparative example were tested under the above test conditions. After the test was completed, the capacity of the lithium-ion battery was measured and whether electrolyte leakage occurred in the lithium-ion battery was checked to determine whether measures adopted in this application can improve the energy density of the lithium-ion battery and reduce the risk of battery electrolyte leakage. The test results were shown in Table 1.

**Table 1 Battery capacity and leakage ratio of examples and comparative examples**

| | a (mm) | b (mm) | c (mm²) | d (mm) | Battery capacity (mAh) | Leakage ratio |
|---|---|---|---|---|---|---|
| Example 1 | 0.2 | 0.3 | 0.05 | 3.1 | 2005.0 | 0/10 |
| Example 2 | 4 | 4 | 5 | 1.8 | 2005.0 | 0/10 |
| Example 3 | 0.5 | 0.5 | 0.12 | 2.8 | 2012.6 | 0/10 |
| Example 4 | 1.5 | 1.5 | 1.2 | 1.8 | 2035.1 | 0/10 |
| Comparative Example 1 | 0 | 0 | 0 | 3.3 | 2000 | 2/10 |
| Comparative Example 2 | 5 | 5 | 12 | 1.8 | 1993.5 | 0/10 |

From Table 1, it can be seen that the risk of leakage in the lithium-ion battery can be reduced by providing notches S at the corners of the electrode assembly 20.

According to Examples 1-4 and Comparative Example 1, it can be concluded that providing notches in the corners of the electrode assembly 20 can reduce the difference d between the length of the housing and the length of the electrode assembly and increase the capacity of the lithium-ion battery, that is, increasing the energy density of the lithium-ion battery.

According to Examples 1-2 and Comparative Examples 1-2, although providing the notches in the corners of the electrode assembly 20 can reduce the difference d between the length of the casing and the length of the electrode assembly, under a condition that the width a of the notch is greater than 4 mm, the length b of the notch is greater than 4 mm, and an area c of the notch S is greater than 5 mm², the capacity of the lithium-ion battery is less than the capacity of the lithium-ion battery without the notch S on the electrode assembly 20. Therefore, the width of the notch should be in a range of a ≤ 4 mm, the length of the notch should be in a range of b ≤ 4 mm, and the area of the notch should be in a range of c ≤ 5 mm². In addition, under a condition that the width a of the notch S is less than 0.2 mm, the length b of the notch S is less than 0.3 mm, and the area c of the notch S is less than 0.05 mm², burrs are prone to exceed the standard during the cutting process, and there is a risk of piercing the separator leading to a short-circuit of the lithium-ion battery. Therefore, these values are not considered in this application.

It can be seen from Examples 1-4 that under a condition that the width of the notch is in a range of 0.2 mm ≤ a ≤ 4 mm, the length of the notch is in a range of 0.3 mm ≤ b ≤ 4 mm, and an area of the notch is in a range of 0.05 mm² ≤ c ≤ 5 mm², although the difference d between the length of the housing and the length of the electrode assembly can be reduced from 3.1 mm to 1.8 mm, the capacity of the lithium-ion battery is only 2005 mAh; and under a condition that the width of the notch S is in a range of 0.5 mm ≤ a ≤ 1.5 mm, the length of the notch S is in a range of 0.5 mm ≤ b ≤ 1.5 mm, and the area of the notch S is in a range of 0.12 mm² ≤ c ≤ 1.2 mm², the difference d between the length of the housing and the length of the electrode assembly can be reduced from 2.8 mm to 1.8 mm, and the capacity range of the lithium-ion battery can be increased from 2012.6 mAh to 2035.1 mAh, which are both greater than 2005 mAh. Therefore, in a preferred embodiment, the width a of the notch is in a range of 0.5 mm ≤ a ≤ 1.5 mm, and the length b of the notch is in a range of 0.5 mm ≤ b ≤ 1.5 mm, and the area c of the notch is in a range of 0.12 mm² ≤ c ≤ 1.2 mm².

To further increase the energy density of the lithium-ion battery, the coating method of the active substance layer on the electrode plate can be changed. For details, refer to the following description.

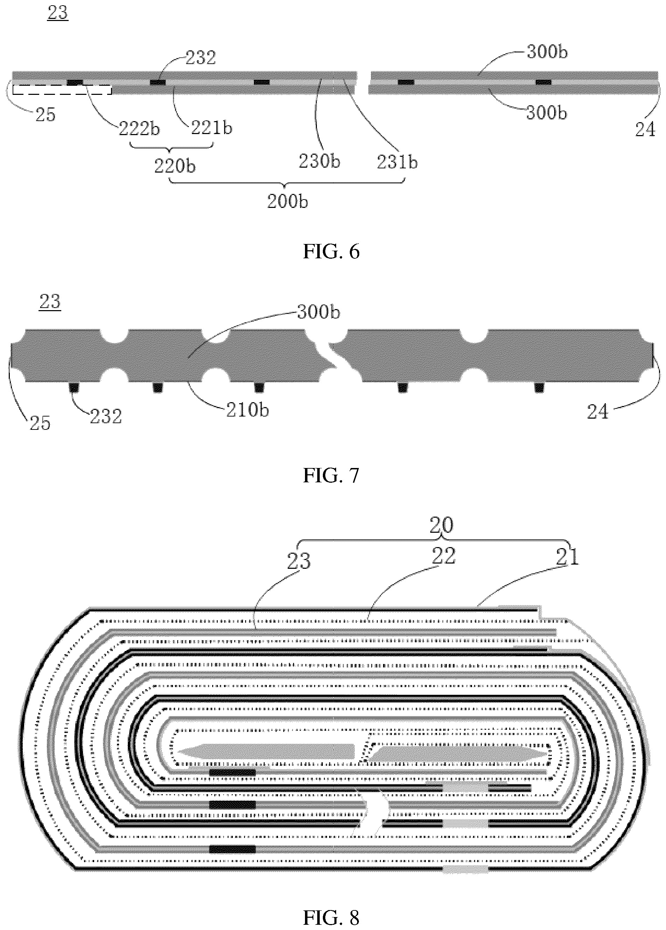

Referring to FIGs. 4 and 6 together, the first electrode plate 21 and the second electrode plate 23 both have a first end 24 and a second end 25 opposite each other. For example, the first electrode plate 21 may be formed as an elongated strip, and the first end 24 and the second end 25 may be two ends in a length direction of the first electrode plate 21.

Referring to FIGs. 4 and 5 together, the first electrode plate 21 includes a first current collector 200a and a first active substance layer 300a. The first current collector 200a includes a first side edge 210a as well as a first surface 220a and a second surface 230a opposite each other. For example, the first surface 220a and the second surface 230a may be two surfaces in a thickness direction of the first current collector 200a, and the first side edge 210a may be located between the first surface 220a and the second surface 230a.

The first surface 220a includes a first coated region 221a and a first uncoated region 222a, the second surface 230a includes a second coated region 231a, and the first active substance 300a is provided in the first coated region 221a and the second coated region 231a. It can be understood that the first coated region 221a may be a region of the first surface 220a coated with the first active substance 300a, the first uncoated region 222a is provided without the first active substance 300a, and the second coated region 231a may be a region on the second surface 230a coated with the first active substance 300a.

In some embodiments, the second surface 230a may be completely covered by the first active substance 300a. In other words, the second surface 230a is constructed to form the second coated region 231a, and the first surface 220a includes the first coated region 221a and the first uncoated region 222a.

As shown in FIG. 4, at the first end 24, the first coated region 221a and the second coated region 231a are aligned, and at the second end 25, the first coated region 221a and the second coated region 231a are misaligned. It can be understood that an end face of the first coated region 221a closer to the first end 24 is aligned with an end face of the second coated region 231a closer to the first end 24, and that an end face of the first coated region 221a closer to the second end 25 is misaligned with an end face of the second coated region 231a closer to the second end 25.

Each first tab 212 is connected to the first current collector 200a and each first tab 212 protrudes out of the first side edge 210a (as shown in FIG. 5).

It should be noted that the connection of the first tab and the first current collector can be understood as the transmission of signals and energy between the first tab and the first current collector.

Referring to FIGs. 6 and 7 together, the second electrode plate 22 has a structure similar to the structure of the first electrode plate 21. The second electrode plate 22 includes a second current collector 200b and a second active substance 300b. The second current collector 200b includes a second side edge 210b as well as a first surface 220b and a second surface 230b opposite each other, the second side edge 210b is located between the first surface 220b and the second surface 230b, each second tab 232 is connected to the second current collector 200b, and each second tab 232 protrudes out of the second side edge 210b.

It should be noted that the connection between the second tab and the second current collector can be understood as the transmission of signals and energy between the second tab and the second current collector.

The first surface 220b includes a first coated region 221b and a first uncoated region 222b, the second surface 230b includes a second coated region 231b, and the second active substance 300b is provided in the first coated region 221b and the second coated region 231b. It can be understood that the first coated region 221b may be a region of the first surface 220b coated with the second active substance 300b, the first uncoated region 222b is provided without the second active substance 300b, and the second coated region 231b may be a region on the second surface 230b coated with the active substance.

In some embodiments, the second surface 230b may be completely covered by the second active substance 300b. In other words, the second surface 230b is constructed to form the second coated region 231b, and the first surface 220b includes the first coated region 221b and the first uncoated region 222b.

As shown in FIG. 6, at the first end 24, the first coated region 221b and the second coated region 231b are aligned, and at the second end 25, the first coated region 221b and the second coated region 231b are misaligned. It can be understood that an end face of the first coated region 221b closer to the first end 24 is aligned with an end face of the second coated region 231b closer to the first end 24, and that an end face of the first coated region 221b closer to the second end 25 is misaligned with an end face of the second coated region 231b closer to the second end 25.

In the related art, electrode plates usually have a single tab, and when the tab is damaged or the current collector is broken, the electrode plate becomes ineffective. Additionally, the coating method of the active substance on the electrode plate is usually done in a non-offset manner, where the active materials on both sides of the current collector are aligned at one end, and also aligned at the other end, such that the pairing energy of the electrode plate cannot be fully utilized after winding, resulting in the electrode assembly having a low energy density. However, the coating method with both ends offset is difficult to process and costly.

Providing a plurality of tabs improves the discharge performance of the electrode plate, allowing electrical energy on the current collector to be conducted through any one of the tabs. This avoids the failure of the electrode plate when a single tab is damaged, and even if the current collector is locally broken, electrical energy at other positions of the current collector can still be transmitted through the tabs, reducing the probability of electrode plate failure and improving the performance of the electrode plate.

Furthermore, based on the structure of a plurality of tabs, this application limits that the first coated region and the second coated region on the electrode plate are aligned at one end and misaligned at the other end, such that a single-sided coated region can be formed at one end of the electrode plate, thereby improving both the energy density and charge-discharge performance of the battery.

It should be noted that the first electrode plate 21 and the second electrode plate 23 have opposite polarities. For example, the first electrode plate 21 is an anode plate and the second electrode plate 23 is a cathode plate, but not limited thereto. The first current collector 200a of the first electrode plate 21 and the second current collector 200b of the second electrode plate 23 are made of different materials.

In some embodiments, along the winding direction of the electrode assembly 20, at the starting end of the second electrode plate 23, the first coated region 221b and the second coated region 231b of the second electrode plate are misaligned, and at the terminating end of the second electrode plate 23, the first coated region 221b and the second coated region 231b of the second electrode plate are aligned; at the terminating end of the first electrode plate 21, the first coated region 221a and the second coated region 231a on the first electrode plate are misaligned, and at the starting end of the first electrode plate 21, the first coated region 221a and the second coated region 231a of the first electrode plate are aligned. This allows both the starting end and the terminating end of the first electrode plate 21 to be energy-paired with the second electrode plate 23, which can increase the energy density of the electrode assembly 20.

For example, FIG. 4 shows the first electrode plate 21 constructed with the first current collector 200a made of a copper foil, FIG. 5 is a view of the first surface in FIG. 4, and FIG. 6 shows the second electrode plate 23 constructed with the second current collector 200b made of an aluminum foil, and FIG. 7 is a view of the second surface in FIG. 6; and the first electrode plate 21 and the second electrode plate 23 can be stacked and wound to form the electrode assembly 20 of the embodiment shown in FIG. 8.

It should be noted that in the electrode assembly 20 shown in FIG. 8, the starting end of the first electrode plate 21 corresponds to the first end 24 of the first electrode plate 21, and the terminating end of the first electrode plate 21 corresponds to the second end 25 of the first electrode plate 21; the starting end of the second electrode plate 23 corresponds to the first end 24 of the second electrode plate 23, and the terminating end of the second electrode plate 23 corresponds to the second end 25 of the second electrode plate 23.

To further improve the safety performance of the lithium-ion battery, a blank foil region may be provided on the electrode plate, as described below.

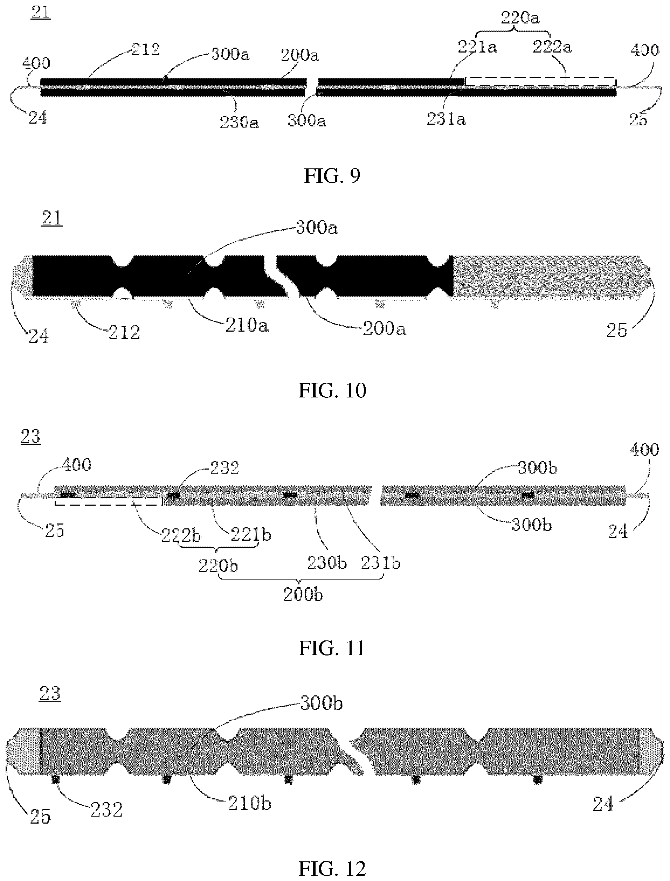

In some embodiments, as shown in FIGs. 9 and 11, at least one of the first end 24 or the second end 25 of the first electrode plate 21 and the second electrode plate 23 further includes a current collector provided with no active substance on either side. That is, at least one of the first end or the second end of the first electrode plate further includes a current collector provided with no active substance on either side, and at least one of the first end or the second end of the second electrode plate further includes a current collector provided with no active substance on either side. For convenience of description, the current collector provided with no active substance on either side is defined as the blank foil region 400.

Specifically, as shown in FIG. 9, at least one of the first end 24 or the second end 25 of the first electrode plate 21 further includes the first current collector 200a provided with no first active substance 300a on either side. That is, the first current collector 200a provided with no first active substance 300a on both the first surface 220a and the second surface 230a is the blank foil region 400. As shown in FIG. 11, at least one of the first end 24 or the second end 25 of the second electrode plate further includes the second current collector 200b provided with no second active substance 300b on either side. That is, the second current collector 200b provided with no second active substance 300b on both the first surface 220b and the second surface 230b is the blank foil region 400.

When the blank foil region 400 of the first electrode plate is opposite to the blank foil region 400 of the second electrode plate, it can act as a barrier to improve the safety performance of the electrode assembly 20.

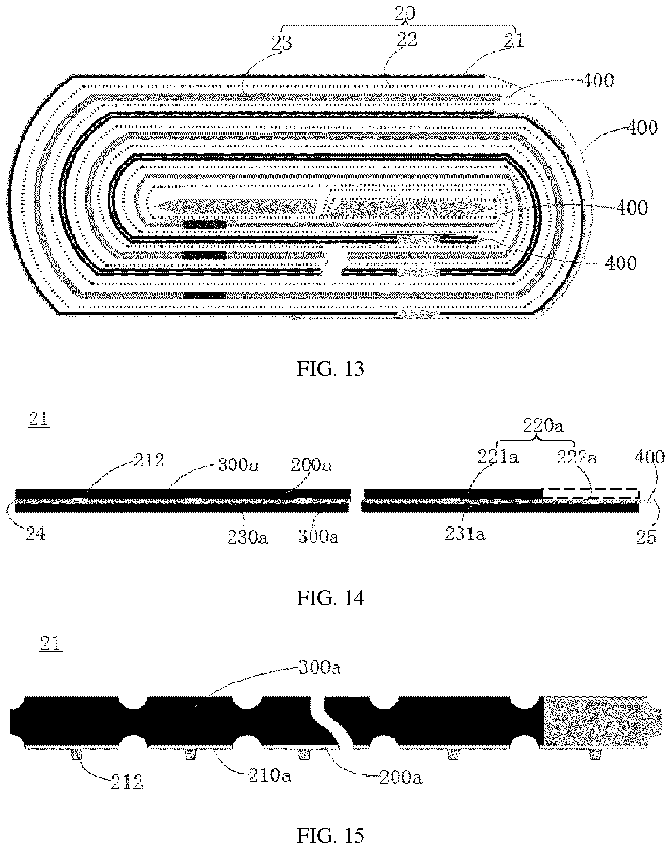

For example, FIG. 9 shows the first electrode plate constructed with the first current collector 200a made of a copper foil, FIG. 10 is a view of the first surface in FIG. 9, and FIG. 11 shows the second electrode plate constructed with the second current collector 200b made of an aluminum foil, and FIG. 12 is a view of the second surface in FIG. 9; and the first electrode plate 21 and the second electrode plate 23 can be stacked and wound to form the electrode assembly 20 of the embodiment shown in FIG. 13. Along the winding direction of the electrode assembly 20, at the starting end of the second electrode plate 23, the first coated region 221b and the second coated region 231b of the second electrode plate 23 are misaligned, and at the terminating end of the second electrode plate 23, the first coated region 221b and the second coated region 231b of the second electrode plate 23 are aligned; and at the terminating end of the first electrode plate 21, the first coated region 221a and the second coated region 231a of the first electrode plate 21 are misaligned, at the starting end of the first electrode plate 21, the first coated region 221a and the second coated region 231a of the first electrode plate 21 are aligned, and the first electrode plate 21 and the second electrode plate 23 are provided with a blank foil region 400 at both the starting end and the terminating end. In this way, the blank foil region 400 can act as a barrier to improve the safety performance of the battery.

It should be noted that in the electrode assembly 20 shown in FIG. 13, the starting end of the first electrode plate 21 corresponds to the first end 24 of the first electrode plate 21, and the terminating end of the first electrode plate 21 corresponds to the second end 25 of the first electrode plate 21; the starting end of the second electrode plate 23 corresponds to the first end 24 of the second electrode plate 23, and the terminating end of the second electrode plate 23 corresponds to the second end 25 of the second electrode plate 23.

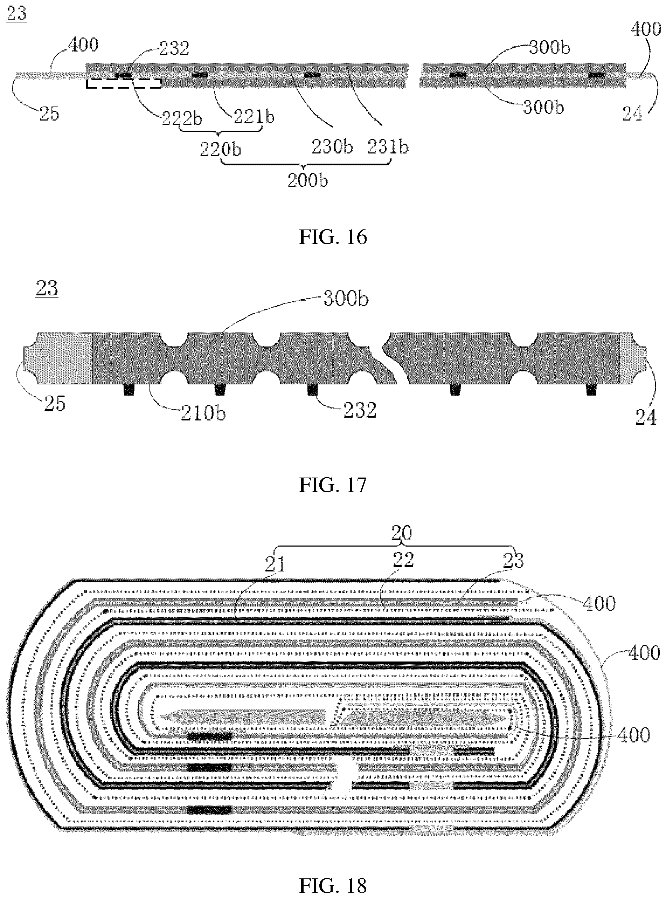

For example, FIG. 14 shows the first electrode plate 21 constructed with the first current collector 200a made of a copper foil, FIG. 15 is a view of the first surface in FIG. 14, and FIG. 16 shows the second electrode plate 23 constructed with the second current collector 200b made of an aluminum foil, and FIG. 17 is a view of the second surface in FIG. 16; and the first electrode plate 21 and the second electrode plate 23 can be stacked and wound to form the electrode assembly 20 of the embodiment shown in FIG. 18. Along the winding direction of the electrode assembly 20, at the starting end of the second electrode plate 23, the first coated region 221b and the second coated region 231b of the second electrode plate are misaligned, at the terminating end of the second electrode plate 23, the first coated region 221b and the second coated region 231b of the second electrode plate are aligned, and the second electrode plate 23 is provided with a blank foil region 400 at both the starting end and the terminating end; and at the terminating end of the first electrode plate 21, the first coated region 221a and the second coated region 231a of the first electrode plate are misaligned, at the starting end of the first electrode plate 21, the first coated region 221a and the second coated region 231a of the first electrode plate are aligned, the first electrode plate 21 is provided with a blank foil region 400 at the terminating end, and the first electrode plate 21 is provided with no blank foil region 400 at the starting end. In this way, the blank foil region 400 can act as a barrier to improve the safety performance of the lithium-ion battery.

It should be noted that in the electrode assembly 20 shown in FIG. 18, the starting end of the first electrode plate 21 corresponds to the first end 24 of the first electrode plate 21, and the terminating end of the first electrode plate 21 corresponds to the second end 25 of the first electrode plate 21; the starting end of the second electrode plate 23 corresponds to the second end 25 of the second electrode plate 23, and the terminating end of the second electrode plate 23 corresponds to the first end 24 of the second electrode plate 23.

In some embodiments, at least one of the first end 24 and the second end 25 of the first electrode plate 21 or the second electrode plate 23 is provided with a blank foil region 400. In other words, one end of either the first electrode plate 21 or the second electrode plate 23 has a blank foil region.

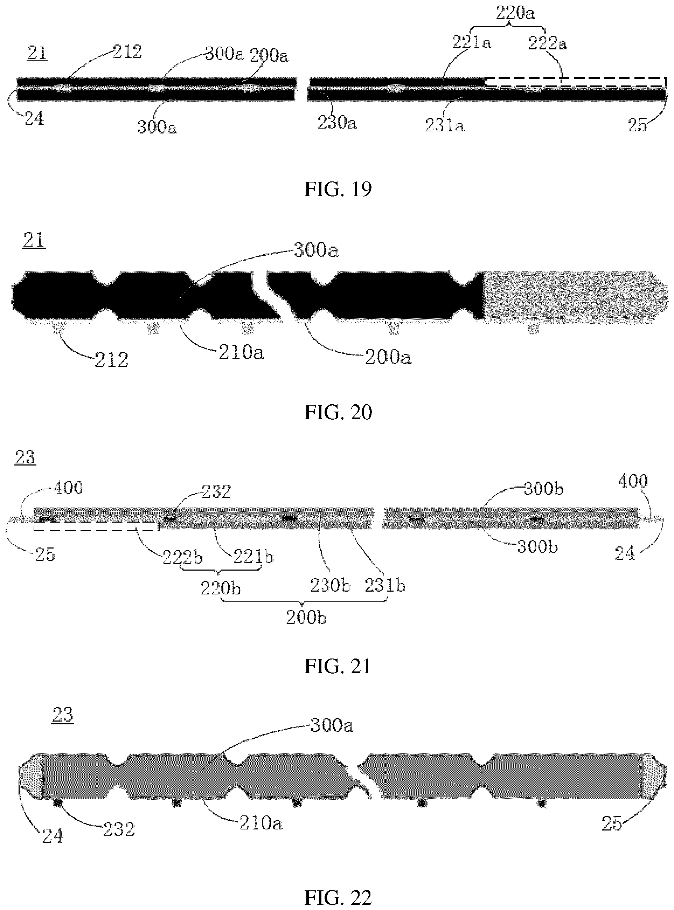

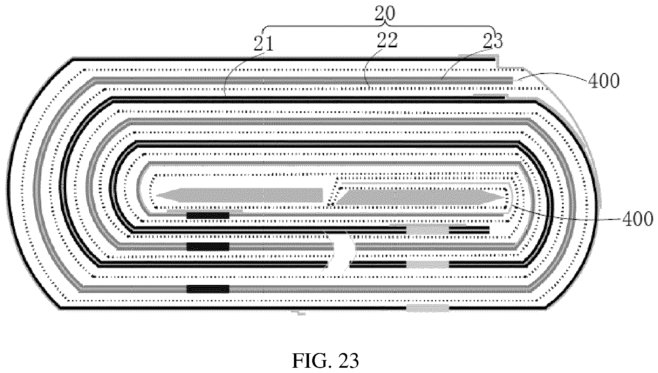

For example, FIG. 19 shows the first electrode plate 21 constructed with the first current collector 200a made of a copper foil, FIG. 20 is a view of the first surface in FIG. 24, and FIG. 21 shows the second electrode plate 23 constructed with the second current collector 200b made of an aluminum foil, and FIG. 22 is a view of the second surface in FIG. 26; and the first electrode plate 21 and the second electrode plate 23 can be stacked and wound to form the electrode assembly 20 of the embodiment shown in FIG. 23. Along the winding direction of this electrode assembly 20, at the starting end of the second electrode plate 23, the first coated region 221b and the second coated region 231b of the second electrode plate are misaligned, at the terminating end of the second electrode plate 23, the first coated region 221b and the second coated region 231b of the second electrode plate are aligned, and there is a blank foil region at neither of the starting end and the terminating end of the first electrode plate 21; and at the terminating end of the first electrode plate 21, the first coated region 221a and the second coated region 231a of the first electrode plate are misaligned, at the starting end of the first electrode plate 21, the first coated region 221a and the second coated region 231a of the first electrode plate are aligned, and the second electrode plate 23 is provided with a blank foil region 400 at both of the starting end and the terminating end, so that the safety performance of the battery can be improved.

It should be noted that in the electrode assembly 20 shown in FIG. 23, the starting end of the first electrode plate 21 corresponds to the first end 24 of the first electrode plate 21, and the terminating end of the first electrode plate 21 corresponds to the second end 25 of the first electrode plate 21; the starting end of the second electrode plate 23 corresponds to the second end 25 of the second electrode plate 23, and the terminating end of the second electrode plate 23 corresponds to the first end 24 of the second electrode plate 23.

Embodiments of this application further provide an electronic apparatus including the wound-type lithium-ion battery 100 as described above.

The electronic apparatus may be an electric vehicle, a sweeping robot, a mobile phone, a tablet computer, or the like.

According to the wound-type lithium-ion battery and the electronic apparatus provided in some embodiments of this application, a structure of a plurality of tabs is provided, improving the charging and discharging performance of the battery and also avoiding a battery failure caused by damage to a single tab, thereby improving the safety performance of the battery. In addition, providing notches in the corners of the electrode assembly can increase the width of the electrode plate and reduce the difference between the length of the housing and the length of the electrode assembly, reducing the headspace of the structure of a plurality of tabs, thereby increasing the energy density of the battery and also reducing the movement space during battery drop, reducing the risk of battery electrolyte leakage, and improving the safety performance of the battery.

In conclusion, it should be noted that the foregoing embodiments are merely intended to describe the technical solutions of this application, but not to limit this application. Under the concept of this application, the technical features in the foregoing embodiments or different embodiments can also be combined, the steps can be implemented in any order, and there are also many other variations in different aspects of this application as described above, which are not provided in detail for the sake of brevity. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of some embodiments of this application.

## Claims

1. A wound-type lithium-ion battery comprising an electrode assembly, wherein the electrode assembly comprises a first electrode plate, a separator, and a second electrode plate sequentially stacked and wound, wherein
the first electrode plate comprises a first current collector and a plurality of first tabs electrically connected to the first current collector, and the second electrode plate comprises a second current collector and a plurality of second tabs electrically connected to the second current collector; and
the electrode assembly is flat, and the electrode assembly is provided with a notch in at least one of its corners.

2. The wound-type lithium-ion battery according to claim 1, wherein
along a winding direction of the electrode assembly, the first electrode plate is provided with a linear array of first notches at the edge, and the second electrode plate is provided with a linear array of second notches corresponding to and matching the first notches, at the edge, wherein the first notches and the second notches together form the notch.

3. The wound-type lithium-ion battery according to claim 1, wherein at least one of the following conditions is satisfied:
(a) along a winding direction of the electrode assembly, the notch has a width a in a range of 0.2 mm ≤ a ≤ 4 mm; and
(b) along an extension direction of the first tab, the notch has a length b in a range of 0.3 mm ≤ b ≤ 4 mm.

4. The wound-type lithium-ion battery according to claim 1 or 3, wherein
the notch has an area c in a range of 0.05 mm² ≤ c ≤ 5 mm².

5. The wound-type lithium-ion battery according to claim 1, wherein the electrode assembly comprises a top surface and a bottom surface opposite each other, and a flat portion and a bent portion connecting the top surface and the bottom surface; the first tabs extend out of the top surface; and corners of the electrode assembly are located at an end of the bent portion, wherein the end of the bent portion is where the bent portion intersects with the top surface and/or the bottom surface in an extension direction perpendicular to the top surface and/or the bottom surface.

6. The wound-type lithium-ion battery according to claim 5, wherein in a projection of the electrode assembly along its thickness direction, in an extension direction of the first tab, length L1 of the outermost edge of the bent portion and length L2 of the main body of the electrode assembly satisfy 0.5 mm ≤ L2-L1 ≤ 3 mm; in a winding direction of the electrode assembly, a difference between width of the top surface and/or bottom surface and width of the main body of the electrode assembly ranges from 0.3 mm to 8 mm; the length of the main body of the electrode assembly is a vertical distance between the top surface and the bottom surface; the width of the main body of the electrode assembly is a distance between projections of the outermost edges of the two bent portions; and the corner of the electrode assembly comprises an intersection of an extension line of the projection of the outermost edge of the bent portion and the top surface and/or bottom surface.

7. The wound-type lithium-ion battery according to claim 1, wherein the first electrode plate has a first end and a second end opposite each other, and the first electrode plate further comprises a first active substance;
the first current collector comprises a first side edge as well as a first surface and a second surface opposite each other, the first surface comprises a first coated region and a first uncoated region, and the second surface comprises a second coated region, wherein at the first end, the first coated region is aligned with the second coated region, and at the second end, the first coated region is misaligned with the second coated region; and
the first active substance is disposed in the first coated region and the second coated region; wherein
each of the first tabs protrudes out of the first side edge.

8. The wound-type lithium-ion battery according to claim 6, wherein the second electrode plate has a first end and a second end opposite each other, and the second electrode plate further comprises a second active substance;
the second current collector comprises a second side edge as well as a first surface and a second surface opposite each other, the first surface of the second current collector comprises a first coated region and a first uncoated region, and the second surface of the second current collector comprises a second coated region, wherein at the first end of the second electrode plate, the first coated region on the second current collector is aligned with the second coated region on the second current collector, and at the second end of the second current collector, the first coated region on the second current collector is misaligned with the second coated region on the second current collector; and
the second active substance is disposed in the first coated region on the second current collector and the second coated region on the second current collector; wherein
each of the second tabs protrudes out of the second side edge.

9. The wound-type lithium-ion battery according to claim 8, wherein
along the winding direction of the electrode assembly, at a terminating end of the first electrode plate, the first coated region and the second coated region on the first electrode plate are misaligned.

10. The wound-type lithium-ion battery according to claim 9, wherein
along the winding direction of the electrode assembly, at a starting end of the second electrode plate, the first coated region and the second coated region on the second electrode plate are misaligned.

11. The wound-type lithium-ion battery according to claim 9, wherein
both the first end and the second end of the first electrode plate comprise a current collector provided with no active substance layer on either side.

12. The wound-type lithium-ion battery according to claim 11, wherein
both the first end and the second end of the second electrode plate comprise the second current collector provided with no active substance layer on either side.

13. The wound-type lithium-ion battery according to claim 10, wherein
along the winding direction of the electrode assembly, under a condition that at the terminating end of the first electrode plate, the first coated region and the second coated region on the first electrode plate are misaligned, and at the starting end of the second electrode plate, the first coated region and the second coated region on the second electrode plate are misaligned, the terminating end of the first electrode plate comprises the first current collector provided with no active substance layer on either side, and both the terminating end and starting end of the second electrode plate comprise the second current collector provided with no active substance layer on either side.

14. The wound-type lithium-ion battery according to claim 1,
further comprising a housing, wherein the electrode assembly is accommodated in the housing, the housing fits with the electrode assembly in shape, the housing is provided with a rounded corner corresponding to and matching the notch, and both the first tab and the second tab extend out of the housing.

15. The wound-type lithium-ion battery according to claim 14, wherein
a difference d between length of the housing and length of the electrode assembly is in a range of 1.8 mm ≤ d ≤ 3.3 mm.

16. The wound-type lithium-ion battery according to claim 14, wherein the rounded corner is an outwardly convex corner, and the notch is an inwardly concave corner.

17. An electronic apparatus comprising the wound-type lithium-ion battery according to any one of claims 1 to 16.
